# EUROPEAN PATENT APPLICATION

(11) **EP 4 535 043 A1**
(43) Date of publication of application: **09.04.2025**
(21) Application number: 23202066.9
(22) Date of filing: 06.10.2023
(51) Int. Cl.: G01V 3/08, G01V 3/165

(54) **EDDY CURRENT SENSOR INSPECTION SYSTEM WITH AI**

(71) Applicant: Hexagon Technology Center GmbH, 9435 Heerbrugg (CH)
(72) Inventor: BERCHTOLD-BUSCHLE, Martin, 88131 Lindau (DE); HEILI, Alexandre, 9450 Altstätten (CH); REIMANN, Bernd, 9435 Heerbrugg (CH); KANEIDER, Wilfried, 6830 Rankweil-Brederis (AT)
(74) Representative: Kaminski Harmann

(57) **Abstract**

A method for detection and measurement of metallic objects (2, 2a-c) such as rebars embedded in a concrete building structure (54), with emitting an electro-magnetic sensor signal (S, Se) and measuring an inductive response signal (S, Sr) at different sensing positions (x) at the surface (55) of the structure (54), thereby measuring the sensing positions (x) in such a way that the response signal (S, Sr) is position determined. The detection of objects (2, 2a-c) and determination of their depths (z) and/or diameters (d) is based on AI models which evaluate the response signal (S, Sr) .

## Description

The present invention relates generally to a method for detection and measurement of objects embedded in a concrete building structure according to claim 1 and to a corresponding system according to claim 11.

Non-destructive testing (NDT) techniques play a significant role in monitoring and diagnosing construction works with embedded structures. An example for embedded structures is reinforced concrete which is a heterogeneous material in which concrete is cast around a network of reinforcing members such as steel reinforcement in order to improve the capability to bear or endure tensile stresses that could otherwise lead to cracking.

In particular, detection and characterization of the properties of embedded metallic objects such as reinforcing steel or bars -or as often abbreviated rebars- in surrounding media such as concrete components is critical for quality control during the construction phase, as well as for example for inspection of unknown structures, e.g. to avoid hitting rebars when drilling, or health monitoring in form of recurrent inspection and post-disaster safety evaluation. The parameters of objects that need to be inspected include in particular their location or 2D-position and depth (cover thickness or overlay) as well as diameter.

NDT techniques are for example described in EP 2159605 A1 which relates to a ground-penetrating radar i.e. a system which sends a high frequency (>10 MHz) electromagnetic wave at a target, and records the time of flight in the material.

On the other hand, documents such as US 4837509 A or US 6541965 B1 relate to electromagnetic-based inspection technologies. A benefit of electromagnetic systems is that they are generally relatively insensitive to the material properties of the embedding material such as concrete itself and other non-metallic materials that may be embedded in the concrete besides rebars.

Hence, it is known in the art to use inductive sensors such as eddy current sensors to sense embedded steel reinforcing bars. Such detectors usually work by measuring the change of a chosen parameter as a user sweeps a sensing head across a surface of interest such as a concrete wall or floor. Through the sweeping movement of the detector, it is possible through the use of the received response signals to determine the position and the length or direction of the hidden object, e.g. the rebar.

Eddy currents are generated in a conductive material in response to a suitable time varying magnetic field being applied to the conductive material. The time varying magnetic field gives rise to a force on the electrons in the conductive material, thus creating current, referred to as "eddy current". The eddy currents themselves give rise to electro-magnetic fields, referred to as induced magnetic fields, which oppose the incident magnetic field. An eddy current sensor comprises magnetic coils which excite said time-varying magnetic fields towards the concrete and receive the induced secondary magnetic fields from conductive objects. In case of inspection of conductive or magnetisable buried objects, in particular metallic objects such as rebars, the induced secondary magnetic fields are sensitive to both the rebar diameter and depth. However, it is difficult to accurately obtain the two parameters in a direct manner, in particular simultaneously.

Known eddy current systems such as those described in US 5339023 A or US 5446379 A apply one or several harmonic voltages to a coil to generate a time-varying magnetic field within the metallic test-piece. This magnetic field induces eddy currents in nearby electrical conductors, which weakens the source magnetic field. This weakening of the source magnetic field results in a measurable voltage signal in a nearby pickup coil, which contains information about the electrical, magnetic, and geometrical properties of the test-piece.

However, with currently known NDT systems and methods based on eddy current sensors, accurate detection of embedded objects and in particular precise determination of the object diameter and cover thickness is still challenging, particularly distinction of objects located close to one another.

It is therefore an object of the present invention to improve an eddy current based system and method for detection of objects embedded in concrete building structures.

It is a further object to provide an improved eddy current based system and method for sensing location and diameter of such embedded objects.

These objects are achieved by realizing the features of the independent claims. Features which further develop the invention in an alternative or advantageous manner are described in the dependent patent claims.

The present invention therefore relates to a method for detection and measurement of metallic objects such as rebars, metallic (e.g. copper, iron or steel) pipes or prestressed tension cables embedded in a concrete building structure such as a currently built or finished building, facility or infrastructure work. The method has the steps of emitting an electro-magnetic sensor signal and measuring an inductive response signal at different sensing positions at the surface of the construction structure, thereby measuring the sensing positions in such a way that the response signal is position determined, hence, a response signal is associated with a position of the sensing path resp. the surface.

Further, there is a step of determining object locations as object position and also object diameter and/or depth with respect to the surface by evaluation of the response signal with detecting objects and determining their positions by at least one artificial intelligence (AI) model such as one or more neural networks as examples of deep learning models or "classical" machine learning (ML) models such as support vector machine (SVM), random forest or decision tree algorithms.

For example, one part of the AI model is embodied as a "detection" neural network for detecting objects and determining their position and a further part of the AI model is used for determining the detected objects' depths and/or diameter, embodied as a regression neural network. Hence, objects are located using machine learned (ML) artificial intelligence (AI).

Thereby, features are extracted from the response signal by signal filtering and/or determining of signal derivatives using an algorithm. The features provide an input to the AI model in form of a feature vector together with the response signal itself. The feature extraction is for example done by a neural network such as a convolutional neural network.

Thereby, the input, i.e. the feature vector at least, is sensing position discretized by discrete sensing position increments of predetermined size, e.g. of equal size or equidistant position steps. Objects are detected and their positions as well as depth and/or diameter are determined with respect to these position increments. Hence, for such a position interval or section of the scanned surface, presence or absence of an object is determined based on the response signal assigned to or associated with this position interval, e.g. with interval length or extent in the range of millimeters.

As an option, a feature extracted from the response signal is a first or second derivative of values of the, in particularly low-pass-filtered, response signal.

As another option, the evaluating of the response signal is done using a sliding window approach. Thereby, for each window a detection by the AI model is executed and/or the window shift amount is determined by said position increment size.

In a further development of the method, there is also a determination of rebar diameter and/or depth by a regression neural network and/or by a multi-class classifier.

In addition or alternatively, there is a measuring of at least one further sensor signal other than the inductive sensor signal and an evaluation also of the further signal for the determination of object position, depth and/or diameter.

Alternatively or additionally, the AI model such as a detection neural network and/or the regression neural network and/or the multi-class classifier can be configured automatically based on sensed or stored pre-known data or manually by a user, e.g. to set parameters, and/or an AI model that is best-suited for a given measurement task characterized e.g. by its construction structure and/or object properties can be selected from a variety of available AI models.

As another example of a further signal, the system comprises a Ground Penetrating Radar (GPR) for measuring and providing a ground penetrating radar signal which like the inductive signal is referenced with regard to surface or sensing position. Thereby, the ground penetrating radar signal provides a further input for either the "inductive" AI model or is inputted into a further, "GPR" AI model, which can be referred to as low level fusion (LLF) . In the latter case, detecting objects and determining object position, depth and/or diameter is done by fusion of the outputs of both the AI models ("inductive" AI model and "GPR" AI model), e.g. both detection neural networks and/or regression neural networks or multi-class classification neural networks.

A ground penetrating radar resp. a GPR signal can also be used to classify sensed embedded objects based on both the inductive response signal and the ground penetrating radar signal, since GPR is sensitive not only to metallic or inductive objects such as iron or steel rebars but e.g. non-metallic objects, too. Such an evaluation of sensor signals of different type can hence be used to detect and distinguish different types of hidden objects or voids within the structure.

As another option, at least a third input for the AI model provided by stored information about the construction structure and/or objects is used, for instance a stored nominal or previously measured rebar diameter, e.g. retrieved from a Building Information Model (BIM) comprising the construction structure. As another example, such an input can be done manually through the user. If an object diameter such as a rebar diameter is known this could be used as input e.g. for the depth regression or classification, and/or selection of a particular neural network specifically trained for this diameter.

In some further developments of the method, the detection of an object such as a rebar is based on a pre-defined detection probability threshold as criterion for classifying an output of the AI model, e.g. above mentioned detection neural network, as "detection" or "no detection".

As still a further development, there is a determination of a central position such as the mid or gravity center for a position interval associated with a detected object and determining the object depth and/or diameter according to the mid position.

Optionally, said detection neural network as well as the regression or multi-class classification neural network comprise a convolutional neural network (CNN) and a fully connected network (FCN) each, whereby the respective fully connected network is fed with an output of the respective convolutional neural network.

The invention also relates to a system for detection and measurement of metallic objects embedded in a concrete building structure. The system comprising an eddy current sensor for emitting an electro-magnetic sensor signal and measuring an inductive response signal at different sensing positions at the surface of the building structure and a position sensor for measuring the sensing positions in such a way that the response signal is position determined, that is, the position of a response signal along a measuring trajectory or within the scanned area is known.

The system further comprises a control and evaluation unit for determining object locations as object position as well as object diameter and/or depth with respect to the surface by evaluation of the response signal. Thereby, the control and evaluation unit is configured to detect objects and determine their positions as well as objects' diameters and/or depths using a system's AI model, e.g. a detection neural network for object detection and object position determination and further in order to determine the depths and/or diameters of detected objects, a system's regression or multi-class classification neural network.

The control and evaluation unit is further configured to algorithmically extract from the response signal features by signal filtering and/or determining of signal derivatives and to provide a feature vector comprising at least the response signal and the extracted features.

The control and evaluation unit is further configured to discretize the input with regard to the sensing position by discrete sensing position increments of predefined, and optionally equal, size and to detect objects and determine their positions as well as depth and/or diameter with respect to the position increments.

In a further development, the system comprises a user interface and the control and evaluation unit is configured to re-train at least one of the AI models, e.g. the detection neural network and/or the regression or multi-class classification neural network, based on a user input over the user interface, in particular a correction such as a confirmation or disaffirmation of object position, depth and/or diameter as determined by the system.

In another further development, the eddy current sensor comprises a coil arrangement of a pair of connected coils, preferably with circular or rectangular cross section, enclosed by a separate third coil, preferably with oval-like or rectangular cross section, whereby all coil axes are arranged perpendicular to the measurement surface such that the magnetic field can enter the measurement surface substantially perpendicular to the surface.

In a system having such two sensing coil units, the control and evaluation unit is optionally configured to measure and evaluate a coil pair sensor signal and a single coil sensor signal either in parallel/synchronous or alternatively, in a two-fold, sequential sensing procedure for same sensing positions to determine, using the AI model, a respective diameter and/or depth separately, i.e. to determine a diameter or depth value based on the coil pair sensor signal and another diameter or depth value based on the single coil sensor signal. In case of sequential measurements, the controller is further configured to store at least one of the at least two determined diameter and/or depth values in a system's memory, at least temporally, for final fusion of the two subsequently determined diameter and/or depth values.

The invention also relates to a computer program product having computer-executable instructions for performing the automatic execution of the steps of the method as claimed, in particular on the system as claimed resp. for the claimed system's control and evaluation unit.

Systems, methods and setups according to the invention are described or explained in more detail below, purely by way of example, with reference to working examples shown schematically in the drawing. The diagrams of the figures should not be considered as being drawn to scale. Where appropriate, the same reference signs are used for the same features or for features with similar functionalities. Different indices to reference signs are used to differentiate between different embodiments of the same or an equivalent feature that is shown exemplary.

Specifically,
- Fig. 1: shows an example of a sensing device, system and method for detection of embedded metallic objects;
- Fig. 2: shows an example of detecting and measuring embedded metallic objects using artificial intelligence (AI);
- Figs. 3a-d: show examples of a detection resp. regression neural networks;
- Fig. 4: shows a further example of detecting and measuring embedded metallic objects using artificial intelligence (AI);
- Fig. 5: shows an example of results for object detection and depth/diameter estimation as outputs of the AI models;
- Fig. 6: illustrates a method to train a detection neural network and regression neural network;
- Figs. 7a,b: show examples of a further development of the object sensing system and method with fusion of multiple sensor data;
- Figs. 8a-c: show an example of a coil arrangement of a sensing device; and
- Figs. 9a-c: show an example of detecting and measuring embedded metallic objects using artificial intelligence (AI) with a sensing device according to figures 8a-c.

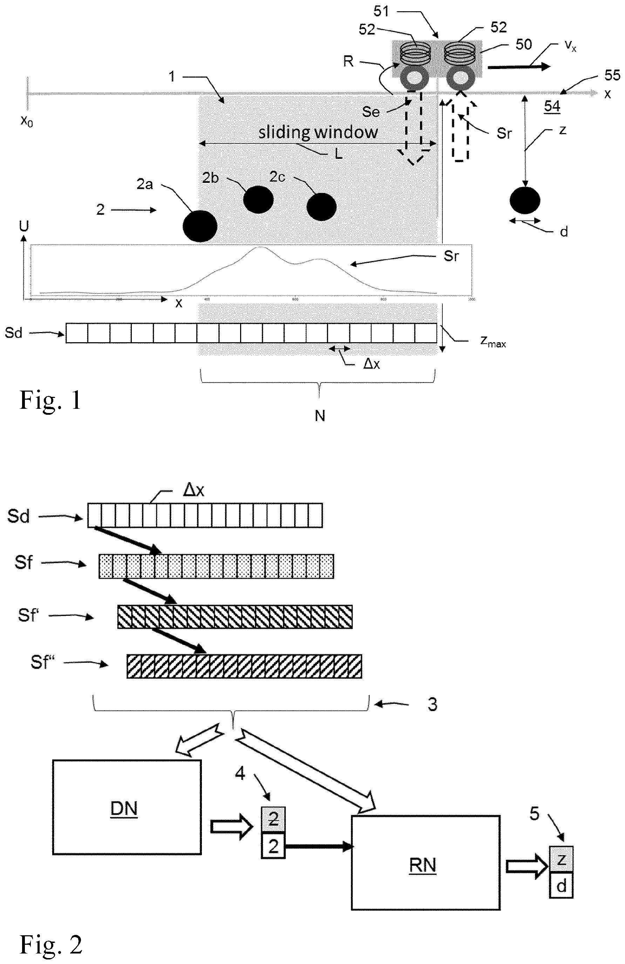

**Fig. 1** shows an example of a device 50, which can be part of a detection or measurement system, and method for detection of metallic objects embedded in a concrete structure such as reinforcement bars 2 which will be referred to in the following as a preferred but non-exclusive example of such embedded metallic objects. The rebars 2, which in the example partly have different diameters d (see rebar 2a in contrast to rebars 2b, 2c), are laid into a concrete wall 54 in different locations. In order to detect the rebars 2, an eddy current sensor device 50 is swept with a defined, e.g. constant, or measured velocity vₓ over the surface 55 of the wall 54 which defines a sensing trajectory or displacement direction x, starting from a zero sensing position x₀.

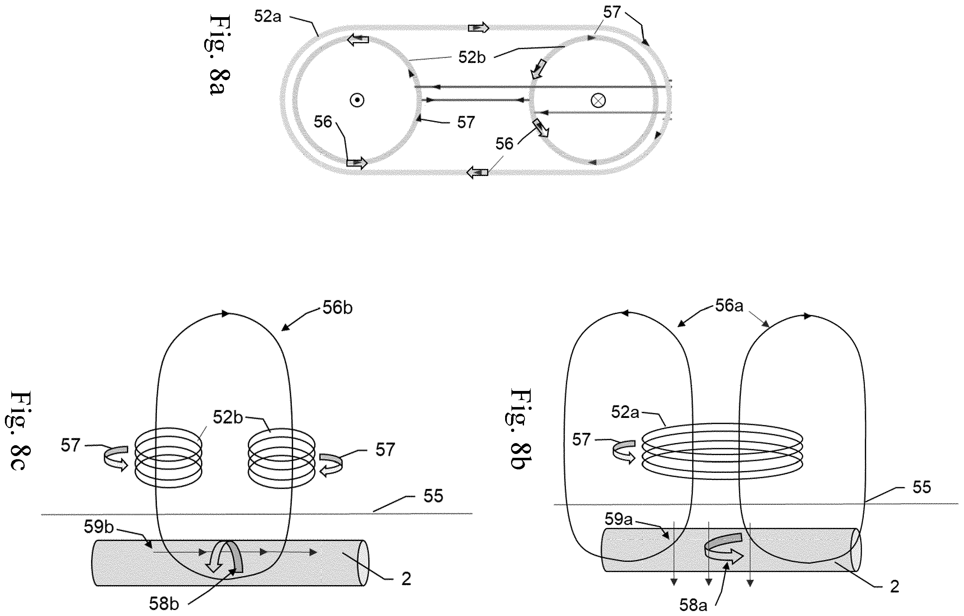

The detection of the rebars 2, in particular the determination of location of a rebar 2, i.e. its x-position and depth z, is based on the principle of induction wherefore the sensor device 50 comprises an eddy current sensor 51 with sensor coils 52 for emitting an electro-magnetic signal Se. The signal Se pervades the wall up to a certain penetration depth zₘₐₓ and the sensor receives a response signal Sr from conductive material such as the rebar steel 2. The response signal Sr is evaluated by a system's processor for sensor control and data processing/signal evaluation (not shown). Examples in more detail of sensor coils for emitting and receiving signals are given in the following figures 8a-c.

In other words, the measurements of the signal amplitude, such as a voltage U, of the sensor 51 is used to detect rebar position x and depth z towards the scanning surface 55 of the detected rebar as well as its diameter d. In addition to the eddy current measurement in Volt, the displacement or sensing position x measured in scanning direction from the start sensing position x₀ of the measurement device 50 is used as measurement variable. Displacement measurement needs not to be bound to one dimension as shown in this simple example but could also be done in two directions. Also, multiple 1D scans/line scans can be combined to cover a 2D-area or to provide a 2D map of rebar structures 2.

The x-displacement is in the example determined by odometry in the form of measuring the rotation R using rotation sensors (not shown) on the wheels or axis of the scanning device 50. Due to movement in scanning direction x, the wheels are turned, which is measured through the rotational sensor in ticks. These ticks are translated in displacement e.g. in units of millimeters. Other options for measuring the position change of sensor 50 are known to a skilled person, for example based on imaging and using algorithms such as SLAM (Simultaneous Localization And Mapping) or using an IMU (Inertial Measuring Unit). Therefore, the sensor 50 can comprise one or more cameras for localizing the sensor 50 on the wall where those cameras can also be used for measuring displacement of the sensor 50.

The eddy current sensor 51 is measuring a response Sr of conductive material in Volts, in this case rebar steel 2, according to an injected magnetic field Se at a certain frequency. In the figure, an example of a response signal Sr as the raw signal by electromagnetic induction due to the presence of the three rebars 2a, 2b, 2c is indicated. The received signal Sr shows three signal peaks which are more or less distinct because of the relative dense or congested arrangement of the rebars 2. The received signal peaks are hard to distinguish in such dense or congested arrangement of the rebars. Approaches known in the art based on signal processing typically fail in such complex scenarios, whereas the AI/ML-based method proposed herein, with training from a large corpus of examples, overcomes such deficiencies.

These timewise measurements are interpolated and discretized by a control and evaluation unit of the sensor 50 resp. of the detection system, i.e. translated into a displacement discrete signal Sd (see also figure 2) of equidistant distance values Δx in Volt (spatial discretization). This signal is sliced into a window 1 of a pre-defined length L with a constant number N of values. Thereby, measurement data is collected according to the method of so-called sliding window. The window 1 is shifted with skipping one value of the signals per shift. Thus, the distance-wise discretization determines the step width or sensing position increments Δx in millimeters by which the window 1 is shifted, e.g. discretization step width and therewith window shift amount are equal to 0.25mm, 0.5mm, 1mm, 2mm or 4mm.

The data is passed to a detector performing rebar detection and estimation of its depth and diameter. The detector may be part of the sensor device 50 or situated remote. For rebar detection, rebar location and rebar characteristics determination, an approach based on an artificial intelligence (AI) model is used as described in context of the following figures.

In the example, each one of the subsequent windows yields one execution of the AI model, which can provide for real time signal evaluation for immediate feedback to a user of a possible detection and regression or multi-class classification. As an alternative, a whole timeseries of signals can be evaluated in one go, e.g. to combine sensor signals to form an image like measurement which finally can be output e.g. as a 2D map as mentioned above.

**Fig. 2** shows an example of detecting and measuring embedded objects such as rebars 2 using artificial intelligence (AI) resp. a measuring system with machine learned algorithms such as neural networks.

In the example, the response signal Sd of a respective sliding window 1 discretized by spatial steps Δx (see figure 1) is filtered first. Therewith, a smooth(er) signal Sf is extracted by passing signal Sd through a low-pass filter. Furthermore in this example, the first derivate Sf' and the second derivative Sf'' of the filtered signal Sf are calculated and used as additional inputs. These four variables Sd, Sf, Sf' and Sf" are used as inputs 3 for a first AI model, in the example a first neural network, named detection network DN.

Based on the input variables Sd, Sf, Sf', Sf", which are combined in a feature vector as input 3, and using training data -the AI system is trained on scenarios where the rebar configuration is known-, the detection neural network DN estimates if a rebar 2 is present or not in the discrete position segment Δx. Thus, the detection network's output 4 is binary in form of "rebar detected" -with square "2" in the figure symbolizing the first output neuron- or "no rebar detected" with regard to segment Δx, -with square "-2-" in the figure symbolizing the second output neuron. If a rebar is deemed detected in section Δx, the corresponding position x of this section is taken as the position x of the rebar 2 or part of the rebar 2.

If the output 4 for a discrete position is positive "2", in a next step, rebar characteristics are estimated using a regression neural network RN with said variables Sd, Sf, Sf', Sf'' as input 3 of the regression network RN. Hence, in case a rebar 2 is detected by the detection network DN, the regression of the rebar's depth z from the surface of the scan and its diameter d is triggered whereby the artificial neural network RN can be similar in structure to the detection Network DN. Also here the output or final network layer 5 shows two neurons, one to output the depth z of the detected rebar and the other one its diameter d.

For an above mentioned 2D-approach, a fully convolutional neural network can have a 2D map or image as output. These output images can be in a heatmap kind of fashion, where more heat indicates a (higher probability of a) detected rebar. Also the regression of depth and diameter of rebars can be encoded in images. Alternatively, the networks DN, RN are merged with having combined detection, regression and/or classification output neurons.

Further inputs into the neural network(s) DN, RN can be used if available or feasible, such as the sensor's displacement speed (vₓ in figure 1) or pre-known rebar characteristics. Such a-priori known data as input to the AI system can improve the estimation of the unknown characteristics of the rebars. For instance, if the diameters of the rebars are deemed known beforehand, e.g. from a building plan, and only the rebars' locations need to be estimated, the diameter can be used as input to the AI models so that the diameter dependent contributions to the measured signals are factored in.

As further options, additional sensors on the sensor device 50 (see figure 1) or information fed into a neural network DN, RN can be used to either enrich the input feature vector 3 towards more accurate detections and predictions and/or to apply situation-specific models. For instance, design information on a wall's structure and material as well as properties and likely locations of buried objects, in particular the rebars 2 themselves, out of a Building Information Model (BIM) can be used together with the known location of the device to extend the feature vector 3 by such data. A specific example would be that known (and possibly location-specific) electromagnetic material properties of the wall are fed into the feature vector 3. As another example, a camera attached to the measuring device 50 can be used to classify a wall type and hence to provide information on the wall type as part of the feature vector 3 and/or to apply wall type specific subsequent ML models for detection and prediction. Also, a user could manually specify or restrict such wall or rebar properties.

As an alternative to estimation of rebar diameter d by using a regression neural network RN, multi-class classifiers can be applied, in particular if these rebar characteristics can only take values from pre-defined lists of discrete values such as standard, industry-specific rebar diameters.

The neural networks DN, RN resp. the method of detection and regression/multi-class classification/rebar characteristics estimation are explained in more detail in the following figures.

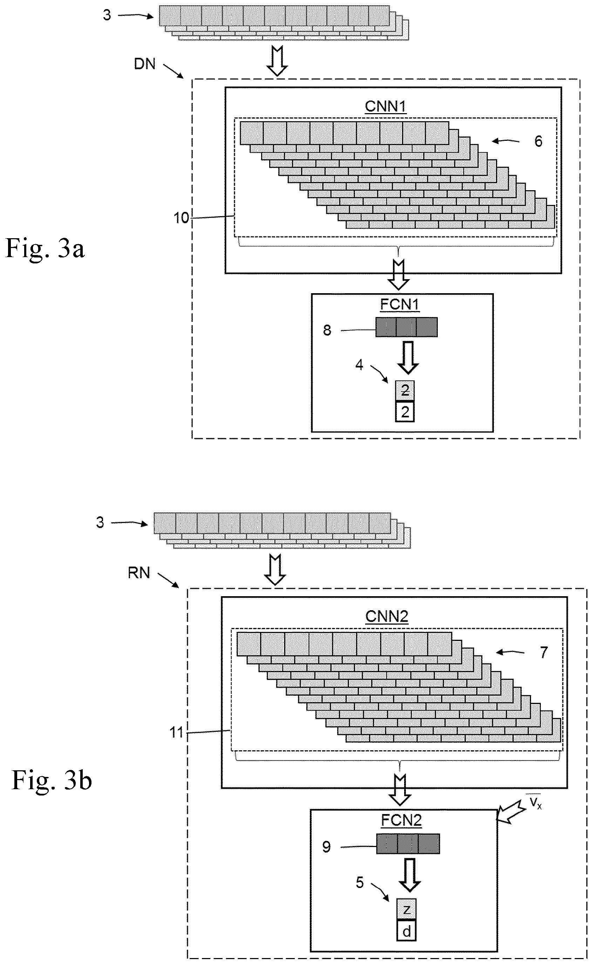

**Figs. 3a-3d** show examples of a detection network DN resp. of a regression network RN as examples of AI models in more detail. For detecting the rebars as exemplary embedded metallic objects according to the input 3 from the windowing and extraction of features Sd, Sf, Sf', Sf", artificial neural networks DN, RN, each with two parts CNN and FCN resp. CNN1/CNN2 and FCN1/FCN2, are used.

As depicted in figure 3a, the first part CNN1 of the detection network DN is in the example a Convolutional Neural Network (CNN), the second part FCN1 is in the example a stack of Fully Connected Network (FCN) layers 8.

The input signal values of the CNN1 are convolved with 1D filters. The number of convolutions can be varied as the number of 1D CNN layers stacked upon each other. For padding, the method 'same' is for instance used, where on the borders of the signal, zeros are added to reach a same-sized output. Alternatively to use zeros, the first and the last values of the window can be mirrored outside. Other modes of same padding are possible. The amount of added values to the window is depending on the size of the filter e.g. size 3 yields adding one value and size 5 two values need to be added to each side to have same padding. This method is used since for each 1D CNN layer, the previous layer is used as input and the original input is appended. Therefore, the convolutional filters can learn to extract valuable features from the input 3, but the original signals sizes are preserved, thus compression loss due to CNN layers is counteracted. Thereby, in the example, the activation function is variable. Pooling and/or normalization such as batch normalization is optionally used and dropout layers can optionally be integrated.

The CNN1 extracts with various filters and over various layers features 6 from the input features 3 (response signal Sd and e.g. its derivatives Sf, Sf', Sf'' as described above). The CNN layers can be seen as feature extraction additional to the above mentioned smoothed signal Sf and the derivatives Sf', Sf" of the signal. The advantage of AI with artificial neural networks is to be able to push the feature extraction into the learning domain and therefore extract more valuable information, e.g. in form of feature maps 6 from as uncompressed as possible response signals.

The output vectors/arrays 6 of the CNN part are then concatenated in one big vector 10 as input 10 to the FCN1. Again, the number of neurons per layer, the quantity of layers and the type of activation functions are variable. As already mentioned, the last layer 4 of the detection network DN has two output neurons, one for no detection " 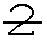 " and one for a detection "2" of a rebar 2, whereby the output 4 of the last FCN layer is summarized by a soft-max-layer to determine the confidence of a rebar being present.

Figure 3b shows an example of a regression network RN in more detail.

If a rebar 2 was detected by the detection network DN, the regression of the rebar's depth z from the surface of the scan and its diameter d is triggered. This is done with an artificial neural network RN very similar in structure to the detection network DN.

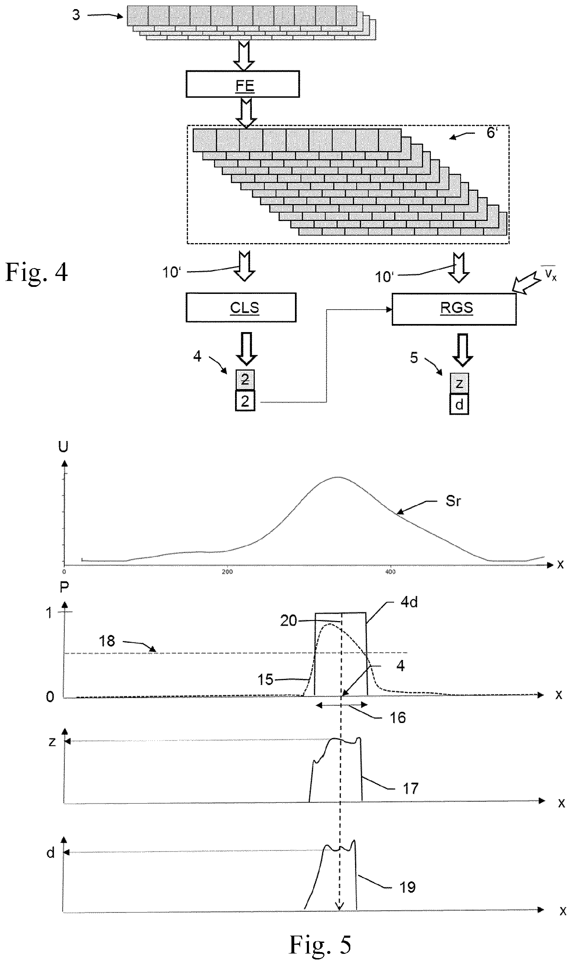

The inputs 3 are also first processed by a variable count of 1D CNN layers as a second Convolutional Neural Network CNN2 with a variable number of filters. After the CNN part, the network RN also comprises a variable number of FCN layers 9 of a second Fully Connected Network FCN2 as second part with a variable size summarizing the output vector 11 combining the single output features 7 of the convolutional part CNN2. In difference to the detection network DN, one of the second FCN layers receives as additional input besides input 11 an abstract average (no scientific unit) of the speed vₓ of the scan throughout the window of measuring. This helps to compensate the signal distortion arising from the speed vₓ of the scan. The last FCN layer 5 consists of two neurons, one to output the depth z of the detected rebar and the other one its diameter d. The actual regression output 5 for the detected rebar needs to be determined in a post-processing, where the detection period is used as additional input as further described in context of figure 5 below.

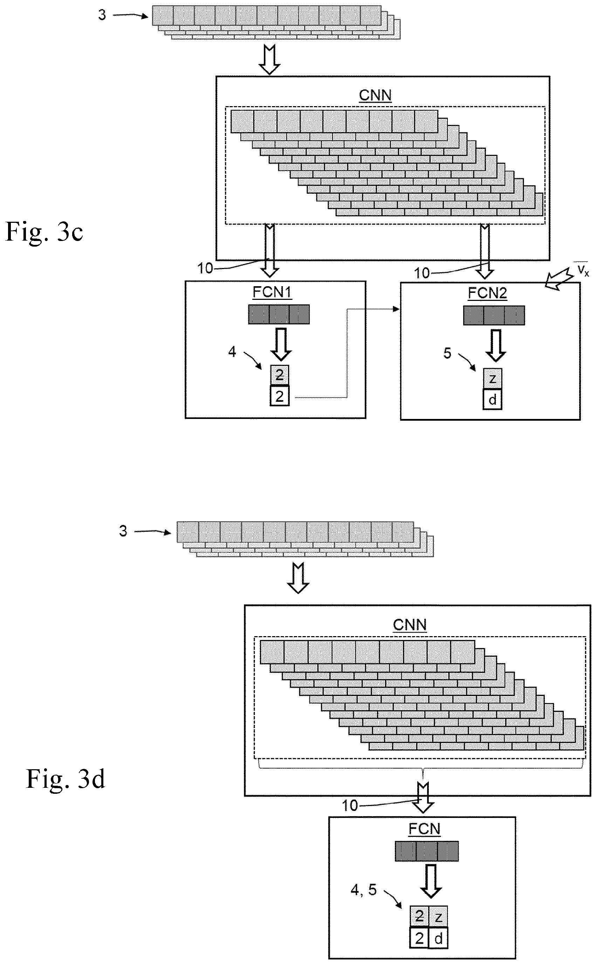

Fig. 3c shows a variant of the approach detailed in Fig. 3a and Fig. 3b. In this embodiment, a single feature extractor, e.g., a CNN, is used to extract features from the inputs. These same features e.g. as a feature vector 10 are then fed into a classifier, e.g., FCN 1, for detection and - assuming a detection was triggered (box "2" in the figure) - into a regressor, e.g., FCN 2, for the estimation of depth z and diameter d.

In other words, in this variant, a single feature extractor, e.g., a single CNN is used to extract features 10 from the inputs 3 for feeding two separate AI models FCN1, FCN2 for detection and depth/diameter determination.

Fig. 3d is yet another embodiment. In this example, a single feature extractor, e.g., a CNN, is used to extract features from the inputs 3. The same feature vector 10 is then fed into a single FCN performing both detection and regression at once, providing output 4 of possible detection "2" as well as output 5 of depth z and diameter d.

**Fig. 4** shows an alternative AI model approach for feature extraction and object detection. In this example, the feature extraction is done by "handcrafted" or pre- or manually designed, non-machine learned feature extraction algorithms FE. The features 6' extracted therewith are again combined in a feature vector 10' and used for classification "detection"/"no detection" -abbreviated CLS in the figure-using machine learning algorithms based on SVM or boosted decision trees, random forest, etc. The extracted features 10' are used for regression (determination of depth z and diameter d) -abbreviated RGS in the figure- too, the regression using AI models such as support vector regression (SVR) or logistic regression, etc.

That is, in particular if handcrafted features 10' are used, object detection and object properties determination can both be done with AI regression and classification techniques such as e.g. SVMs or boosted decision trees.

**Fig. 5** shows an example of results for rebar detection and depth/diameter estimation as outputs of the neural networks whereby for the sake of clarity the example is limited to one rebar instead of multiple rebars as in the previous example of figure 1.

The upper part of the figure shows the raw signal Sr of the eddy current sensor, then below the detection probability P, then below the estimated depth z and finally at the bottom the estimated rebar diameter d, all variables in dependence of the x-position.

Originating from the detection signal Sr, resulting from the sweeping of the sensor in x-direction, thereby covering also the position of the hidden rebar which gives a signal curve with a peak or maximum as schematically depicted, and based on signal data derived from the detection signal Sr such as distance discretized signal, a filtered signal and first, second or higher derivatives Sd, Sf, Sf', Sf'' as described above, a detection probability P is determined by the detection neural network DN as described above in context of figures 2 and 3a.

The detection network DN first has a continuous output or detection probability curve 15 which is discretised in a subsequent step. In other words, since the detection network DN receives distance discretized measurements and e.g. smoothed values, first and second derivate Sd, Sf, Sf', Sf'' thereof in a window of a certain size as inputs, the detection is not a singular peak in space, but an output 15 with a growing and decreasing confidence for a certain length 16. According to a pre-defined threshold 18, the probability of the detection network DN is discretized 4d, wherein confidences below the threshold 18 result in a "zero", (i.e. no detection), and above in a "one" (i.e. detected rebar).

For this discrete period of detection 16 with the pattern zero-one-zero, the middle location 20 is determined, which is then the final output 4 of the rebar detection in millimeters from the starting point of the scan in scanning direction.

This location 20/4 is used in the second part of the processing to read the depth estimation 17 and the diameter estimation 19 of the regression network RN as described in context of figures 2 and 3b to determine the exact rebar depth z from the surface of the scan and its diameter d. Said otherwise, in order to determine a final depth and diameter value out of the depth curve and diameter curve outputted for the whole period length 16, the mid position of the binary 0-1-0 detection position "window" 16 is used as x-position value. Then, the corresponding depth value z and diameter value d of which are taken as final output of the regression network RN.

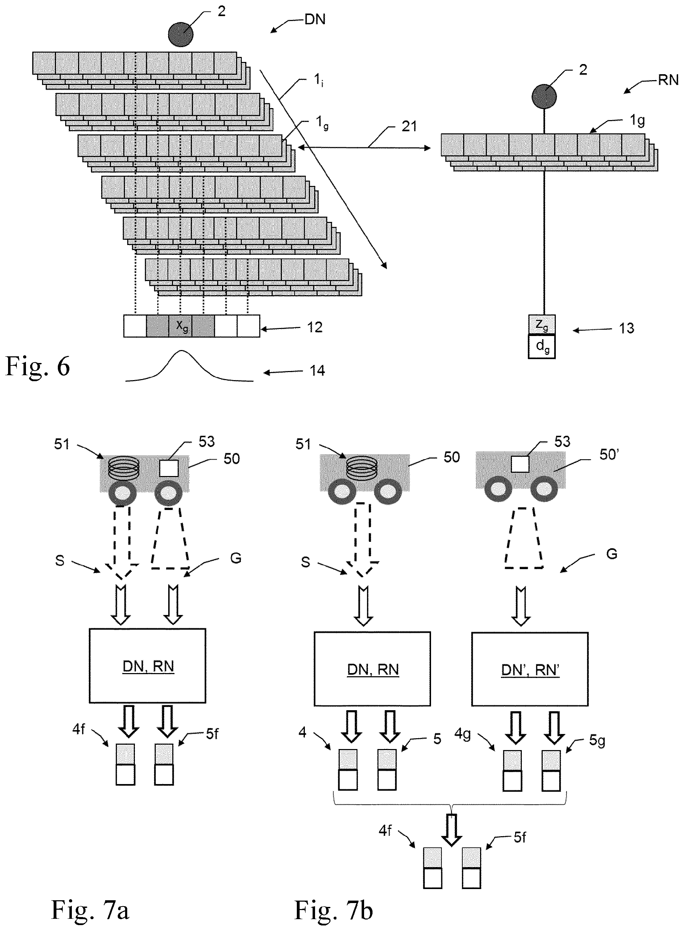

**Fig. 6** shows a method to train the detection network DN and regression network RN respectively to determine parameters of the detection and regression networks DN, RN. The AI rebar detection system is trained on scenarios where the rebar configuration is known. In this case, an Artificial Intelligence process (AI process) in form of a supervised Machine Learning process (ML process) with backpropagation of an error gradient to optimize the model(s) towards a minimum difference between predictions and ground truth 12, 13 is used.

With supervised ML, each input of a respective network DN or RN requires designated ground truth values 12 or 13, that is true position x_{g} of a rebar 2 or its true depth z_{g} and diameter d_{g}. Based thereon, the error of the output of a respective network DN, RN towards the respective ground truth 12, 13 is used to calculate a gradient, which points in the direction in which the error is reducing. This gradient is then used to propagate updates, according to a learning rate, backwards from the output of a respective network DN, RN to each parameter successively.

To collect eddy current measurements in combination with a ground truth describing the actual rebar configuration x_{g}, z_{g}, d_{g} in a continuous manner, a measurement apparatus of high precision is used which is able to recreate plausible placements of available kinds of rebar that could typically be used in construction. In a data collection process, a sufficiently large amount of data is collected and then split in three parts: training, validation and test sets. First, the training data is used to actually learn the parameters of the detection and regression networks DN, RN with the aforementioned method.

Second, the validation set is used in the training to monitor the generalization capabilities of the networks DN, RN and to prevent overfitting. Last, the accuracy of the networks DN, RN is evaluated on a test set at the end which is designed in such a way that it is comparable to the training and the validation data but does not have the exact same conditions. Thus, it is guaranteed that during the training, the networks DN, RN are neither overfitted directly to the training nor indirectly to the validation set.

To get the networks DN, RN in the training to converge to good accuracy, several strategies are applied:
As the above described sliding window approach generates a detection for every shift of windows 1ᵢ, a continuous confidence curve of estimated rebar presence is matched to a ground truth x₀ in which the exact location of the rebars would be singular, isolated peaks. In supervised backpropagation training of an artificial neural network, however, a gradient needs to point into a descending direction of the error between the output of a network DN, RN and the ground truth x_{g}, z_{g} or d_{g}.

To cope with this issue, a weighting is introduced, where the detection and the regression models DN, RN not only have outputs on the exact rebar location x_{g}, but also before and after with less emphasis due to a smaller weight (weighting of loss). The weights are distributed around each exact rebar location x_{g} in a Gaussian fashion, schematically indicated by symbol 14 in the figure. Thereby, loss functions such as weighed binary cross-entropy loss or mean squared error loss can be applied. Above that, a weighting helps also to narrow the detection peaks and therefore to deal with congested rebar scenarios.

As said, the regression network RN is activated by the detection network DN upon detection of a rebar 2. During training of the network RN, the ground truth x_{g} is used to select (symbolized by arrow 21) the window 1_{g} from the successive multiple sliding windows 1ᵢ on which the regression network RN is trained. The training samples are such windows 1_{g} centered around the respective rebar 2.

To not only have one singular window 1_{g} and therefore one peak output to train from but to provide a weighting as mentioned, a certain number of windows can be taken before and after the one window 1_{g} of the exact rebar location x_{g} (not depicted in the figure for sake of clarity). The windows before and after the exact location x_{g} are weighted less in the same manner as described above.

As only a finite number of rebar configurations can be captured with the apparatus, the training data will always be discrete in the rebars' locations x, depths z and diameters d. Thus, there will always be real settings to be measured that will not occur in the training data. To yield a better generalization on the test data, a data augmentation is added in the training process to vary the raw measurements from the sensor slightly, so the networks DN, RN do not overfit to the discrete settings of the training data.

The trained neural networks DN, RN for detection, regression and classification can be adapted or relearned with user feedback, e.g., after drilling or digging. For that purpose, a feedback loop can be implemented where a user (based e.g., on some actual drilling at the measured location x or based upon design or measurement information from another system) provides feedback on detection and regression/classification statements of the ML models. These statements/labels can be used to re-train and/or finetune the ML models in order to make them more accurate in general and/or to fine-tune them to given tasks/locations/boundary conditions, etc.

The detection system can comprise a display that allows visualization of the estimated rebar configuration, for instance in real-time and/or arranged at the measurement sensor or coupled by data-link, e.g. a wireless connection. Such a configuration can facilitate said re-training or fine-tuning by allowing graphic user feedback or input.

Besides user input for neural network training, a user interface might in addition or alternatively serve to allow a user to correct or confirm a detection or regression/classification result, wherefore the neural network might be designed to output a valuation or uncertainty of an output. Low confidence values in detection and/or prediction could be used to switch from a fully automated mode (when confidence is high) to a semi-automated mode in which the user is asked to check results or is warned to be cautious on results.

**Figs. 7a,b** show examples of a further development of the rebar sensing system and method with fusion of multiple sensor data.

In this case, multiple sensor types are used, e.g., combining inductive sensing 51 with ground penetrating radar (GPR) 53.

Ground penetrating radars are also used to detect hidden or underground assets noninvasively, hence without digging up or drilling the embedding structure. GPRs use radar pulses to image the subsurface. The emitted radar pulses are reflected or refracted or scattered back to the surface when encountering a boundary between materials with different permittivity (electric polarizability), wherein the returned radar pulses are analyzed for underground assets. GPRs are effective for locating plastic conduits or concrete storm and sanitary sewers, for example, which cannot be effectively located using standard electromagnetic induction utility locating tools as such tools can identify only conductive materials. Like such induction sensor, GPRs are moved along trajectories to identify underground assets lying underneath the trajectories within an area to be scanned.

Fusion of sensor data or measuring results evolving from different measurement principles such as induction and radar can be leveraged to detect and determine depths/diameters as well as materials of embedded objects. Underground objects can be made of several types of material e.g., plastic or metal. A ground penetrating radar 53 is able to detect objects regardless of material thanks to reflection with relatively good depth measurement capabilities and relatively low position accuracy and electro-magnetic (EM) sensors 51 sense metallic objects with relatively low depth measurement capabilities and relatively high position accuracy.

In the example according to figure 7a, one single measurement device 50 is used that is equipped with both an EM sensor 51 and a GPR sensor 53. Thereby in the example, fusion of the sensor data is done onboard the sensor device 50.

Fusion of the EM signal S and the GPR signal G is done at the very beginning of the data processing, so that all neural networks DN, RN act upon "EM plus GPR" data and output "fused" results 4f, 5f. Hence, the neural networks DN, RN act on combined feature input vector(s).

In the example according to figure 7b, separate sensor devices 50, 50', one with EM sensor 51 and one with GPR 53, are driven over the wall in separate instances. Here, their respective sensor signals S, G are fused in a position-aware manner afterwards.

Thereby, in the example, separate pipelines for EM and GPR data S, G with respective networks DN, RN and DN', RN' are used that are not aware of each other. Hence, the inductive signal S resp. features extracted therefrom is fed independently into a first network architecture DN, RN and the GPD signal G resp. features extracted therefrom into a second network architecture DN', RN' as depicted in the figure.

The respective first and second detection and prediction results 4, 5 and 4g, 5g of each network DN,RN and DN',RN' are fused at the end to final detection and prediction results 4f, 5f. That is, in this approach there is a fusion of the outcomes 4, 5 and 4g, 5g to final combined outcomes 4f, 5f.

The different approaches of sensor fusion before network processing or thereafter are not bound to a respective system of one sensor device 50 or multiple ones 50, 50', but can be applied independent therefrom. Also, hybrids can be implemented, e.g., two separate EM- and GPR-aware neural detection network models DN and DN' first calculate candidates for detected bars 4, 4g. Then, on combined findings 4f two separate EM- and GPR-aware neural regression networks RN, RN' predict depth/diameter estimates 5, 5g.

Not only but particularly such detection systems with sensor fusion can be further extended to learn an object type classifier, e.g., based on features like material, depth, shape, etc. Such a system could distinguish between, e.g., steel rebars, metallic pipes, non-metallic pipes, metallic cables, non-metallic cables, mines, etc.

**Figs. 8a****-c** show an example of an arrangement of sensor coils in form of a first sensor coil 52a and a second pair of sensor coils 52b for an eddy current sensor in accordance with the present invention. Figure 8a shows a 2D birds eye perspective of the combined coil arrangement and figures 8b,c a simplified 3D perspective whereby for better clarity the sensor coil 52a is depicted in figure 8b only and the coil pair 52b in figure 8c only.

As can be seen, the parallelly arranged coil pair 52b comprises two coils shaped circularly in cross section and the single coil 52a is shaped oval-like, by two halves of a circle, interconnected by two lines. Other coil shapes than the ones exemplified here are possible, too, e.g. rectangularly shaped coils.

The single coil 52a encompasses the pair 52b. All coils 52a, 52b are substantially arranged in the same plane, the cross sections parallel to the surface 55 to be measured. Said otherwise, the coil axes are perpendicular to the measurement surface 55 and therewith the (primary) magnetic fields generated by the coils 52a,b penetrates the surface 55 to be measured substantially perpendicularly.

In the example, the winding directions -indicated in figure 8a by arrows 56- of the two coils 52b are alternate to the winding direction of the outer coil 52a. The pair of coils 52b are electrically connected in contrast to the single coil 52a which is separate from the coil pair 52b. In the example, the pair of coils 52b are connected in such a way that the electric current -indicated in the figures by arrows 57- is directed in the coil pair 52b counter wise to each other (however in contrast to the example, in principle, the electric current could also be directed equally) . As a result, the magnetic fields 56b of the coil pair 52b overlay to a common flux sense as indicated in figure 8c (in the 2D birds eye view of figure 8a, flux is oppositely perpendicular to the drawing plane) whereas the single coil 52a generates a two-fold, counter-sense magnetic field 56a as indicated in figure 8b. In consequence, the eddy currents 58a and 58b generated by the magnetic fields 56a and 56b as well as the induced "secondary" magnetic fields 59a and 59b are mutually perpendicular as indicated in the figures 8b,c.

For optimal sensing of both differently oriented induced magnetic fields 59a,b, the sensor can comprise two pick-up coils (not shown) that are differently oriented. That is, one pick-up coil is arranged with its axis perpendicular to the surface 55 for sensing the "vertical" secondary field 59a and the other pick-up coil is arranged parallel to the surface 55 for sensing the "horizontal" secondary field 59b. The pick-up coils can thereby be placed side by side or can be nested.

The "oval" coil arrangement 52a has the advantage of a relatively large magnetic field propagation and thus allows for a relatively large determination of depth. On the other hand, the coil pair 52b shows a relatively large sensitivity to the diameter of sensed objects such as a rebar 2, allowing for a relatively precise determination of object diameter. Hence, the combination of both in one coil arrangement provides the advantages of both.

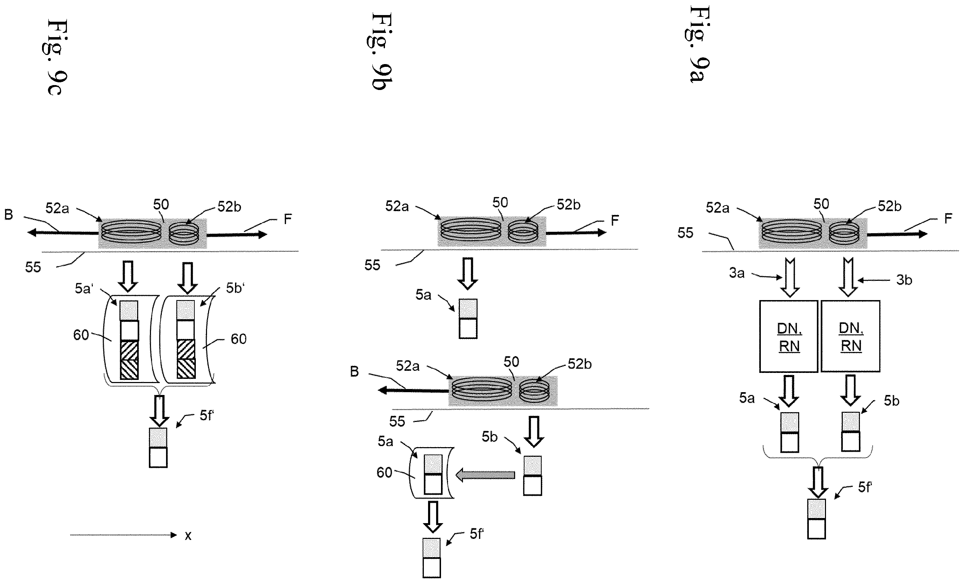

**Figs. 9a****-c** schematically depict methods of signal evaluation for a detection and measurement system with an eddy current sensor 50 having multiple sensor coils 52a,b as for example described with respect to figures 8a-c above.

Figure 9a shows a simplified sensor device 50 with a first coil 52a and second coils 52b whereby for sake of clarity, only one second coil 52b is depicted, aside first coil 52a (despite being enclosed as shown figure 8a). In the example, the sensor device 50 is moved in a direction F along the surface 55 of the structure embedding the objects to be detected and measured (not shown in the figure). From both sensor signals of each coil 52a and 52b inputs 3a and 3b as in principle described above (e.g. in context of figure 2) are derived and fed into an AI model DN, RN each. The signals or data stream of both sources 52a, 52b are evaluated in parallel throughout the movement F.

The AI model gives for each input 3a and 3b an output 5a, 5b comprising an object's depth and diameter as described above. The results 5a, 5b then are combined to final depth and diameter estimates 5f', preferably in real time or synchronously to give an immediate measurement result to a user as soon as an object is detected by the sensor 50 when passing it as already mentioned above.

Figure 9b shows an alternative approach whereby for sake of clarity in contrast to figure 9a the inputs and AI models are not indicated though of course part of the method. In this example, the sensor device 50 is moved two times over the structure surface 55, e.g. once in a forward movement F and afterwards a second time in a backward movement B or two times in same direction. The first pass gives out a first output 5a based on the sensor signals of the first coil 52a, in principle similar to the approach according to figure 9a. However, this time there is no parallel evaluation of the second sensor signals of the second coil 52b as this second sensor part is inactive during the first pass F and the first output 5a is stored in a memory 60.

The second coils 52b are not activated before the start of the return pass B whereas the first coil 52a then is inactive. Sequential activation instead of synchronous activation provides the advantage that there is no overlapping of the signals resp. induced magnetic fields of both coils 52a, 52b and no need for signal separation which would be quite challenging.

The AI model, fed with the second sensor signals, puts out second output 5b. The second output 5b then is combined, preferably as soon as it is available, with the stored first output 5a to provide a final output 5f', e.g. in form of mean depth and diameter values. It can be seen as a set of two independent equations (due to the different excitation) with two "unknowns" depth and diameter, that then can be solved (or much more accurately / reliably be determined).

Thereby, the single outputs 5a and 5b can be weighted, e.g. the second depth value by coil 52b could be weighted less as the first one by coil 52a dependent on the depth as the depth estimation of the latter is expected to be more reliable or precise for relative deep objects as explained above.

The outputs 5a and 5b for each sensor part 52a, 52b resp. each pass F, B can comprise not only a depth and diameter estimation, but can be characteristics vectors which include depth, diameter and further characteristics, in particular object position, denomination of the underlying sensor part used (52a or 52b) and/or sensing direction (F or B).

Figure 9c indicates yet another evaluation approach for a multifold eddy current sensor 50 in a simplified scheme. Likewise the method of figure 9b, two passes in form of a forward movement F and subsequent backward movement B are applied (whereby in the figure for sake of simplicity they are shown in a combined view) . In each pass F or B, there is activation of or sensing by only one of the coils 52a or 52b in each pass as in the previous alternative method of figure 9b, which as said above is advantageous with regard to signal handling.

In this example again, the outputs 5a' and 5b' for each sensor part 52a, 52b resp. each pass F, B comprise not only a depth and diameter estimation, but the outputs 5a' and 5b' are characteristics vectors including depth, diameter and further characteristics such as object position, denomination of the underlying sensor part used (52a or 52b) and/or sensing direction (F or B).

The output vectors 5a' and 5b' are stored in a memory 60 and after the final pass B is finished, that is at the end of the measurement resp. for the whole scan line or scan area, the output vectors 5a' and 5b' are read and combined to the final user output 5f' of the determined objects' depths and diameters.

A skilled person is aware of the fact that details, which are here shown and explained with respect to different embodiments, can also be combined with details from other embodiments and other permutations in sense of the invention.

## Claims

1. A method for detection and measurement of metallic objects (2, 2a-c), in particular rebars, embedded in a concrete building structure (54), with emitting an electro-magnetic sensor signal (S, Se) and measuring an inductive response signal (S, Sr) at different sensing positions (x) at the surface (55) of the structure (54), thereby measuring the respective sensing position (x) in such a way that the response signal (S, Sr) is position determined,
**characterized by**
• algorithmically extracting from the response signal (S, Sr) features (Sd, Sf, Sf', Sf'', 6, 6', 7) by signal filtering and/or determining of signal derivatives and
• detecting objects (2, 2a-c) as well as determining objects' diameters (d) and/or depths (z) with respect to the surface (55) based on an artificial intelligence (AI) model with the response signal (S, Sr) and the extracted features combined in a feature vector (3, 10, 10', 11) as input to the AI model
whereby
• the feature vector (3, 10, 10', 11) is used as input to the model comprises data discretized by discrete sensing position increments (Δx) of predefined size and
• objects (2, 2a-c) are detected and their positions (x) as well as their depth (z) and/or diameter (d) determined with respect to the position increments (Δx).

2. A method according to claim 1,
**characterized by**
• a detection neural network (DN, DN') as a first part of the AI model for detecting objects (2, 2a-c) and determining their position (x) and
• a regression neural network (RN, RN') and/or a multi-class classification neural network (CLS) as a second part of the AI model for determining depths (z) and/or diameters (d) of detected objects (2, 2a-c).

3. A method according to claim 1 or 2,
**characterized by**
algorithmically extracting features (6, 7) by a neural network, in particular a convolutional neural network (CNN, CNN1, CNN2).

4. A method according to any one of the preceding claims, **characterized by**
evaluating the response signal (S, Sr) by a sliding window approach whereby
• for each window detection is executed by the AI model and/or
• the window shift amount is determined by the position increment size (Δx).

5. Method according to any one of the preceding claims, **characterized by**
the feature vector (3, 10, 10', 11) comprises at least one additional feature provided by and/or extracted from
• stored information, in particular by a Building Information Model, about the building structure and/or objects (2, 2a-c), or
• at least one further sensor signal (G) other than the inductive sensor.

6. Method according to claim 5,
**characterized in that**
the further sensor signal is a ground penetrating radar (GPR) signal (G), whereby the ground penetrating radar signal (G)
• provides at least one feature of the feature vector (3, 10, 10', 11) input to the AI model or
• is inputted into a further AI model and detecting objects (2, 2a-c) and determining objects' positions (x), depths (z) and/or diameters (d) is done by fusion of outputs (4, 5, 4g, 5g) of both AI models.

7. Method according to claim 6,
**characterized by**
classifying of sensed embedded objects (2, 2a-c) based on the inductive response signal (S, Sr) and a ground penetrating radar signal (G) as further signal.

8. Method according to any one of the preceding claims,
**characterized in that**
the detection of an object (2, 2a-c) is based on a pre-defined detection probability threshold as criterion for classifying as "detection" (2) or "no detection" (-2-) as a pre-step for a subsequent diameter (d) and/or depth (z) determination.

9. Method according to any one of the preceding claims,
**characterized by**
determining a central position (20), in particular a mid position or gravity center, for a position interval (16) associated with a detected object (2, 2a-c) and determining the object's depth (z) and/or diameter (d) according to the central position (20).

10. Method according to claim 2 and 3 or any one of the preceding claims referring to claim 2 and 3,
**characterized in that**
the detection neural network (DN, DN') as well as the regression neural network (RN, RN') comprise a convolutional neural network (CNN, CNN1, CNN2) and a fully connected network (FCN, FNC1, FCN2) each, whereby the respective fully connected network (FCN, FNC1, FCN2) is fed with a respective feature vector (3, 10, 11) as output of the respective convolutional neural network each (CNN, CNN1, CNN2).

11. A system (50) for detection and measurement of objects, in particular rebars (2, 2a-c), embedded in a concrete building structure (54), the system comprising
• an eddy current sensor (51) for emitting an electro-magnetic sensor signal (S, Se) and measuring an inductive response signal (S, Sr) at different sensing positions (x) at the surface (55) of the structure (54),
• a position sensor for measuring the respective sensing position in such a way that the response signal (S, Sr) is position determined,
• a control and evaluation unit,
**characterized in that**
• the control and evaluation unit is configured to detect objects (2, 2a-c) and determine their positions (x) as well as objects' diameters (d) and/or depths (z) based on a system's AI model with the response signal (S, Sr) providing a first input (3) of the AI model, whereby the control and evaluation unit is further configured to
• algorithmically extract features (Sd, Sf, Sf', Sf'', 6, 6', 7) from the response signal (S, Sr) by signal filtering and/or determining of signal derivatives,
• combine the response signal (S, Sr) and the extracted features (Sd, Sf, Sf', Sf'', 6, 6', 7) in a feature vector (3, 10, 10', 11),
• discretize the feature vector (3, 10, 10', 11) with regard to the sensing position (x) by discrete sensing position increments (Δx) of predefined size and
• detect objects (2, 2a-c) and determine their positions (x) as well as their depths (z) and/or diameters (d) with respect to the position increments (Δx).

12. System (50) according to claim 11,
**characterized in that**
the system (50) comprises a user interface and the control and evaluation unit is configured to re-train the AI model based on a user input over the user interface, in particular a correction of object position (x), depth (z) and/or diameter (d) as determined by the system (50).

13. System (50) according to claim 11 or 12, **characterized in that**
the eddy current sensor (51) comprises a coil arrangement of a pair (52b) of connected, in particular circular, coils, enclosed by a single separate, in particular oval-like, coil (52a), all coil axes being arranged in such a way that they are perpendicular to the measurement surface (55) when measuring at the surface (55) with the eddy current sensor (51).

14. System (50) according to claim 13,
**characterized in that**
the control and evaluation unit is configured
• to measure and evaluate a coil pair sensor signal and a single coil sensor signal in parallel or in a two-fold, sequential sensing procedure, in particular in the course of a forward (F) and a return (B) movement of the eddy current sensor (51), for same sensing positions (x) to determine a respective diameter (d) and/or depth (z) separately, and in case of a sequential sensing procedure,
• to store at least one of the at least two determined diameter (d) and/or depth (z) values in a system's memory for final fusion of the two diameter and/or depth values.

15. A computer program product having computer-executable instructions for performing the automatic execution of the steps of the method according to claims 1, in particular on the system (50) according to claim 11.
